## Europäisches Patentamt

## European Patent Office

## Office européen des brevets

(19)

(11) Veröffentlichungsnummer: **0 231 366**
**B1**

(12) # EUROPÄISCHE PATENTSCHRIFT

(45) Veröffentlichungstag der Patentschrift:
26.07.89

(51) Int. Cl.⁴: **B 65 B 25/02, A 01 G 23/04**

(21) Anmeldenummer: **86905198.7**

(22) Anmeldetag: **26.08.86**

(86) Internationale Anmeldenummer:
**PCT/DE 86/00340**

(87) Internationale Veröffentlichungsnummer:
**WO 87/01357 (12.03.87 Gazette 87/6)**

(54) VORRICHTUNG ZUM VERPACKEN VON KONIFEREN MIT MECHANISCH ARBEITENDEM GREIFER.

(30) Priorität: **30.08.85 DE 3531013**

(43) Veröffentlichungstag der Anmeldung:
**12.08.87 Patentblatt 87/33**

(45) Bekanntmachung des Hinweises auf die Patenterteilung:
**26.07.89 Patentblatt 89/30**

(84) Benannte Vertragsstaaten:
**AT BE CH DE FR GB LI**

(56) Entgegenhaltungen:
**DE-A- 3 445 648**
**US-A- 3 416 434**
**US-A- 3 426 359**

(73) Patentinhaber: **Schneiders, Hermann,
Apostelstrasse 40, D-4100 Duisburg 13 (DE)**

(72) Erfinder: **Schneiders, Hermann, Apostelstrasse 40,
D-4100 Duisburg 13 (DE)**

(74) Vertreter: **Schulte, Jörg, Dipl.-Ing., Hauptstrasse 2,
D-4300 Essen-Kettwig (DE)**

## Beschreibung

Die Erfindung betrifft eine Vorrichtung zum Verpacken von Koniferen, insbesondere von sogenannten Weihnachtsbäumen u.ä. Pflanzen, mit einem Gerüst zum axialen Anordnen eines Trichters mit zugeordnetem Netzrohr und Netz sowie eines Greifers, der axial zum Trichter am Gerüst verfahrbar ist und neben der die Greiferbacken tragenden Haltestange ein federbelastetes stangenförmiges Element aufweist, das in Richtung Greiferbacken verschieblich geführt und gelenkig einerseits mit den Greiferbacken und am gegenüberliegenden Ende mit einer Rückzieheinrichtung verbunden ist, die ihrerseits mit einem dem Gerüst zugeordneten rampenförmigen Niederhalter zusammenwirkt, wobei zwischen dem stangenförmigen Element und der Haltestange eine über den Stamm des Baumes auslösbare, mit zwischen der Greiferbacke angeordneter Auslöseplatte ausgerüstete Schließsperre angeordnet ist.

Derartige Vorrichtungen werden insbesondere eingesetzt, um in der Vorweihnachtszeit die vor allem als Weihnachtsbäume dienenden Koniferen im Wald bzw. am Fällort so einzupacken, daß sie möglichst wenig Platz einnehmend und ohne Schaden zu erleiden transportiert werden können. Es hat sich nämlich herausgestellt, daß je enger die Zweige an den Stamm angedrückt werden, ein um so schonenderer und platzsparender Transport möglich ist.

Bei einer bekannten Vorrichtung (DE-A-3 242 912) ist ein an ein Transportfahrzeug anhängbares Gerüst vorgesehen, dem an einem Ende ein Trichter mit Netzrohr zugeordnet ist und am anderen Ende ein Greifer, der an einer Führungsbahn am Gerüst in Richtung auf den Trichter verfahrbar ist. Dieser Greifer verfügt über ein Scherengelenk mit endseitigen Greiferbacken, wobei der Greifer mit einer Haltestange und dem darauf verschieblich angeordneten Rohr endseitig verbunden ist. Das Rohr wird über eine Feder, die sich an der endseitigen Halteplatte abstützt, belastet und ist auf der Haltestange verschieblich geführt, so daß mit Verschieben des Rohres die Greiferbacken über das Scherengelenk auseinandergefahren oder auf den Stamm des Baumes aufgepreßt werden können. Zum Verschieben des Rohres dient ein Hydraulikzylinder. Dieser Hydraulikzylinder verursacht aufgrund der notwendigen Hydraulikleitungen und der Steuerventile einen erheblichen Investitions- und auch späteren Betriebsaufwand. Nachteilig ist weiter, daß der sich öffnende und schließende Greifer bzw. die Greiferbacken an dem auf das Netzrohr aufgezogene Netz festhaken und beim Vorfahren dieses mit in den Trichter hineinziehen können, so daß sich ein erheblicher zusätzlicher Netzverbrauch ergibt, ganz davon abgesehen, daß eine einwandfreie Einfassung des Baumes nicht mehr möglich ist. Die im Prinzip gleichen Probleme treten bei der aus der US-PS 3 440 954 bekannten Vorrichtung auf, bei der die Greiferbacken über eine entsprechend belastende Feder immer in Schließstellung gehalten sind. Zum Einführen des Stammes des Weihnachtsbaumes müssen dann ein oder mehrere Bedienungsleute den Stamm zwischen die Backen pressen, d.h. die Backen gegen die Federkraft öffnen. Entsprechend ungenügend ist die Haltekraft, mit der die Feder die beiden Greiferbacken gegeneinanderdrückt, so daß eine einwandfreie Handhabung, d.h. ein Durchziehen des Weihnachtsbaumes durch den Trichter nicht gewährleistet ist.

Ähnlich arbeitet auch die dem Oberbegriff des Anspruchs 1 entsprechende Vorrichtung nach der US-A-3 416 434. Allerdings ist der Greifer hier mit einer mechanisch wirkenden Schließsperre versehen. Diese wird durch die zwischen den Greiferbacken angeordnete Auslöseplatte betätigt, sobald der Stamm des Baumes dagegen gestoßen wird. Beim Zurückziehen des Greifers wird die Feder des mit den Greiferbacken verbundenen stangenförmigen Elementes wieder gespannt, so daß es erneut beim Auftreffen des Stammes ruckartig verschoben werden kann. Nachteilig ist, daß das Arretieren des Baumstammes über eine Art Backenmaul erfolgt, das sich beim Einschieben des Stammes an und in ihm festhakt. Dieses Backenmaul wird über Auslöseplatte und stangenförmiges Element ruckartig entsperrt. Damit können nur Bäume mit ungefähr gleichem Stammdurchmesser verarbeitet werden und das Entsperren erfordert gesonderte Aktivitäten bzw. Handgriffe.

Der Erfindung liegt die Aufgabe zugrunde, einen von Fremdenergie unabhängig und den Stamm ruckartig erfassenden Greifer für die Verpackungsvorrichtungen von Weihnachtsbäumen zu schaffen, der ohne zusätzliche Handgriffe arbeitet und eine sichere Führung des Weihnachtsbaumes auch durch den Trichter gewährleistet.

Die Aufgabe wird erfindungsgemäß dadurch gelöst, daß das stangenförmige Element als die Haltestange umhüllendes Rohr ausgebildet und mit einem die Greiferbacken aufweisenden Scherengelenk im Scherengelenkpunkt verbunden ist, und daß die Auslöseplatte über ein Führungsgestänge gehalten ist, das an Auslegearmen des Rohres mittig über ein Hohlrohr und endseitig zwischen Rollen, das Rohr über einen exzentrisch gelagerten Auslöser blockierend bzw. auslösend verschieblich geführt ist, wobei der Auslöser ein am Auslegearm schwenkbar befestigter Winkelhebel ist, der an einer Seite mit einer an einer mit der Haltestange fest verbundenen Halteplatte gelagerten Stange verbunden ist und an der gegenüberliegenden Seite die auf dem Führungsgestänge bzw. einer aufgesetzten Sperrplatte abrollbare Rolle aufweist.

Mit einer derartigen Vorrichtung ist es möglich, den Greifer zunächst geöffnet und dabei durch die Schließsperre gesichert in den Trichter einzufahren, wo die Sperre dann durch den Stamm des zu verpackenden Baumes ausgerastet wird, so daß die Greiferbacken den Baum bzw. dessen Stamm sicher und fest erfassen. Über die Hohlzylinderfeder ist dabei sichergestellt, daß die Haltekraft der Greiferbacken ausreichend ist, um den Weihnachtsbaum anschließend durch den Trichter hindurch in das Netz hineinzuziehen. Dies erfolgt dadurch, daß der Greiferwagen nun mit dem Greifer zusammen zurückgezogen wird, wobei durch die korrespondierend angeordnete und ausgebildete Rückzieheinrichtung am Ende des Gerüstes eine automatische Öffnung des Greifers erfolgt, so daß der Baum frei wird und weiter gehandhabt, d.h. beispielsweise auf einen Transportwagen gefördert bzw. geladen werden kann. Mit dieser Rückzieheinrichtung erfolgt gleichzeitig wieder eine Aufladung der Hohlzylinderfeder, so daß die gesamte Vorrichtung anschließend sofort wieder für den nächsten Arbeitsvorgang zur Verfügung steht, ohne daß weiteres Hilfspersonal dafür benötigt wird.

Über das Führungsgestänge wird beim Einführen des Stammes zwischen die Greiferbacken der Auslöser quasi automatisch betätigt, wobei er aufgrund seiner Ausbildung sicherstellt, daß die Greiferbacken nur dann zusammengefahren werden, wenn die Auslöseplatte mit dem Führungsgestänge entsprechend auf den Auslöser einwirkt. Über die Rollen ist sichergestellt, daß die für das Betätigen des Auslösers notwendige Kraft auch von einer einzelnen Person, die den Baum in die Greiferbacken einführt, aufgebracht werden kann. Der Auslöser ist entsprechend exzentrisch gelagert, so daß bei Überwinden der entsprechenden Rollreibungskräfte ein Zusammenfahren der Greiferbacken dadurch eintritt, daß das Rohr über den Auslöser nicht mehr blockiert wird, also sich über die Hohlzylinderfeder gedrückt entsprechend in Richtung Greiferbacken verschieben und diese dabei schließen kann.

Über den Winkelhebel wird die notwendige Exzentrizität leicht erreicht, die das Blockieren gegen die Federkraft sicher ermöglicht, ohne daß die Gefahr besteht, daß die Greiferbacken unbeabsichtigt geschlossen werden bzw. sich selbst schließen. Der Winkelhebel als solcher stützt sich über die Stange an der Halteplatte ab, die am Greiferwagen angeschlagen ist.

Um beim Wiederspannen, d.h. beim Zurückziehen des Rohres und damit Öffnen der Greiferbacken sicheres Einrasten des Auslösers zu gewährleisten, ist es von Vorteil, wenn dem Führungsgestänge eine sich an der Auslöseplatte und dem Hüllrohr abstützende Feder zugeordnet ist. Über diese Feder, die nur geringe Kräfte aufbringen muß, ist sichergestellt, daß bei entsprechender Vorgabe das Führungsgestänge mit der Sperrplatte wieder unter die Rolle des Auslösers fährt, so daß dieser in Sperrwirkung kommt.

Die notwendige Exzentrizität des Auslösers ist gegeben, wenn, wie erfindungsgemäß vorgeschlagen, die Halteschraube des Auslösers, über die er am Auslegerarm schwenkbar gehalten ist, in Richtung Greiferbacken vor der gedachten Verbindungslinie Stangenverbindungspunkt/Rollenlagerpunkt und näher, vorzugsweise um 50% näher zu letzterem angeordnet ist.

Sollte die die Auslöseplatte bzw. das Führungsgestänge in die Sperrposition zurückdrückende Feder eine zu geringe Federkraft haben oder in ihrer Wirkung nachlassen, so ist ein Einstellen bzw. Einjustieren ohne weiteres dadurch erleichtert und möglich, daß die Auslöseplatte, die über das diagonal versetzt angreifende Führungsgestänge gehalten ist, aus zwei Platten besteht, die über Schrauben gegeneinander verschieblich verbunden sind. Hierdurch ist im übrigen die Möglichkeit gegeben, den Auslösepunkt in eine bestimmte Entfernung zu den Greiferbacken bzw. deren Messerschneiden zu legen, wobei ein genaues Ansprechen gesichert ist, weil das Führungsgestänge diagonal versetzt an die Auslöseplatte angreift.

Ein Einstellen der Hohlzylinderfeder, ohne daß deren Auswechseln nötig ist, wird erfindungsgemäß dadurch bewerkstelligt, daß eine parallel zur Haltestange angeordnete, sich am Rohr und an der Halteplatte abstützende, einstellbar ausgebildete Federanordnung vorgesehen ist. Dabei ist die Federanordnung an der Halteplatte schwenkbar und am Rohr verschieblich gehalten und weist eine zwischen zwei auf einer am Rohr geführten Stange, vorzugsweise auf einer Gewindestange verschiebliche Spannplatten angeordnete Spannfeder auf. Durch Belasten bzw. Vorspannen bzw. Entlasten der Spannfeder kann die Wirkung der Hohlzylinderfeder entsprechend beeinflußt werden, um so die Haltekräfte, die die Greiferbacken auf den Stamm ausüben, den Gegebenheiten jeweils anzupassen.

Die das Rohr beeinflussende Rückzieheinrichtung besteht nach einer zweckmäßigen Ausbildung der Erfindung aus einem am Rohr gelenkig angeordneten Hebel, der am freien Ende ein Kugellager aufweist und der an einem am Ende der Schiene angebrachten Niederhalter abrollend auf das Rohr einwirkend geformt, vorzugsweise gebogen ausgebildet ist. Überfährt der mit dem Kugellager ausgerüstete Hebel den Niederhalter, so wird damit automatisch das Rohr schneller bewegt, als die Haltestange, so daß die Hohlzylinderfeder entsprechend vorgespannt wird und die Greiferbacken gleichzeitig geöffnet werden.

Das Angreifen bzw. Festhaken der Greiferbacken an dem Netz beim Durchfahren der Trichter wird erfindungsgemäß dadurch sicher unterbunden und damit ein einwandfreier Betrieb der gesamten Vorrichtung gewährleistet, daß das Rohr von einem auch die Greiferbacken und die Federanordnung aufnehmenden Hüllrohr umgeben ist, an das die Greiferbacken überragende Netzabweiser angesetzt sind. Eine solche Ausbildung hat den Vorteil, daß über das Hüllrohr alle wichtigen Teile abgeschirmt, also geschützt sind, wobei dieses Hüllrohr vorteilhafterweise gleichzeitig die Möglichkeit bildet, daran den vorteilhaften Netzabweiser anzubringen. Dieser bzw. diese Teile sind zweckmäßigerweise als schlingenförmig gebogene Rundstangen ausgebildet, deren Bögen parallel und nach außen versetzt zu den Greiferbacken verlaufen. Durch die Ausbildung als Rundstangen ist ein Festhaken des Netzes sicher unterbunden, gleichzeitig ist den Greiferbacken durch diese Form und die spezielle Anordnung der Rungstangen die notwendige Bewegungsfreiheit gegeben.

Um die Handhabung und gleichzeitig auch die Montage und Demontage zu erleichtern, ist erfindungsgemäß vorgesehen, daß das Hüllrohr über eine T-förmige Halterung, deren Flansch dem Hüllrohr entsprechend gebogen ausgeführt ist, mit dem Rohr verbunden ist. Über eine solche Halterung kann das Hüllrohr beispielsweise lediglich über zwei Schrauben angebracht werden, so daß die im Hüllrohr angeordneten Teile des Greifers bzw. der Vorrichtung nach Lösen der Schrauben sofort zugänglich, vorzugsweise zu warten sind.

Die vorliegende Erfindung zeichnet sich insbesondere dadurch aus, daß ein ausschließlich mechanisch arbeitender Greifer für Verpackungsvorrichtungen von Koniferen geschaffen ist, der vorteilhaft sicher arbeitet, weil er im Aufbau einfach ist und der über die jeweils notwendigen Haltekräfte verfügt, die notwendig sind, um größere oder kleinere Weihnachtsbäume durch das Rohr mit dem Netz hindurchzuziehen. Durch einfache Zusatzmaßnahmen kann dabei die Haltekraft auch noch den jeweiligen Einsatzfällen entsprechend angepaßt werden, so daß eine derartige Vorrichtung vorteilhaft vielseitig ist. Darüber hinaus ist von wesentlichem Vorteil, daß die für das Auslösen der Haltekräfte, d.h. für das Zupacken der Greiferbacken notwendigen Kräfte auf den Auslöser nur gering sind und letztlich sogar noch eingestellt werden können, so daß auch hierdurch die Variabilität der gesamten Vorrichtung begünstigt ist. Als Antrieb wird lediglich noch der für den Greiferwagen benötigt, über den also der Greifer aus der Endposition in den Trichter hineingezogen und dann mit dem erfaßten Weihnachtsbaum zusammen durch den Trichter hindurchgezogen wird. Dieser Antrieb wird dabei in den jeweils günstigsten Bereich, d.h. also vorzugsweise in den Bereich des Trichters gelegt, wodurch der notwendige Regel- und Schaltaufwand ausgesprochen gering ist. Zu erwähnen ist schließlich noch die Erhöhung der Arbeitssicherheit und gleichzeitig die Verringerung des Netzbedarfes, da ein Festhaken des Greifers am Netz beim Durchfahren des Trichters sicher unterbunden werden kann.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:

Fig. 1 eine Gesamtseitenansicht der Vorrichtung,

Fig. 2 den Greifer in Seitenansicht,

Fig. 3 den mit einem Hüllrohr gesicherten Greifer in Seitenansicht,

Fig. 4 das Vorderteil des Greifers mit den Greiferbacken und dem Scherengelenk in Seitenansicht,

Fig. 5 eine Vorkopfansicht des Greifers,

Fig. 6 das hintere Ende des Greifers mit der Rückzieheinrichtung,

Fig. 7 einen Greifer in geschlossener Stellung,

Fig. 8 den Auslöser in Seitenansicht bei geschlossener Stellung,

Fig. 9 den Greifer in geöffneter Stellung und

Fig. 10 den Auslöser bei der Stellung nach Fig. 9 in vergrößerter Darstellung.

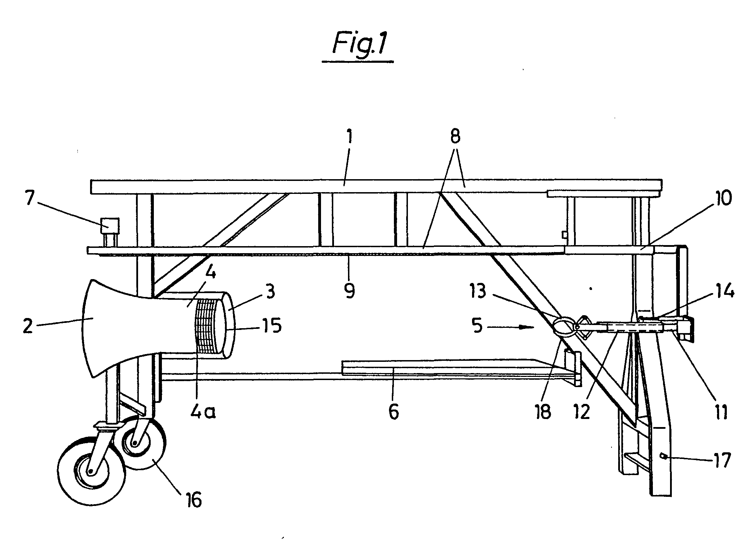

Die Vorrichtung zum Verpacken von Koniferen u.ä. Pflanzen gemäß Fig. 1 weist ein U-förmig ausgebildetes Gerüst (1) auf, in dem sowohl die Trichter (2, 3) mit Netzrohr (4) und Netz (4a) wie auch der verfahrbar angeordnete Greifer (5) angeordnet sind. Dabei ist das U-förmige Gerüst (1) mit der Öffnung zum Boden angeordnet und außerdem sind die Verfahrteile am Grundträger und am oberen Ende des Gerüstes (1) vorgesehen, so daß eine Verschmutzung dieser Teile hier nicht eintreten kann. Dies ist besonders vorteilhaft, weil derartige Vorrichtungen in Waldungen und in schmutzigen und zugänglichem Gelände zum Einsatz kommen, wo schon aufgrund der allgemeinen Bedingungen eine große Verschmutzungsgefahr gegeben ist. Hinzu kommt, daß frisch geschlagene Bäume verarbeitet werden.

Die Trichter (2, 3), die unterschiedliche Durchmesser aufweisen, sind an einer Flanke des U-förmigen Gerüstes (1) und der Greifer (5) in seiner Endstellung an der anderen Flanke des U-förmigen Gerüstes angeordnet. Zwischen beiden ist der Ablagetisch (6) positioniert, auf den der Greifer (5) kurz vor Erreichen seiner Ausgangsstellung den eingepackten Baum ablegt.

Der Greifer (5) ist über den an der Schiene (8) achsparallel zu dem Trichter (2 bzw. 3) fahrenden Verfahrantrieb (7) verbunden und fährt dabei genau in der Achse des jeweiligen Trichters (2, 3). Der Verfahrantrieb (7) zieht den Greiferwagen (10) über die Kette (9) jeweils in Richtung auf sich zu bzw. von sich weg, d.h. also in den Trichter (2 bzw. 3) hinein oder mit dem erfaßten Baum zusammen aus diesem heraus.

Der Greifer (5) weist eine Haltestange (11) und ein darauf verschieblich angeordnetes Rohr (12) auf, wobei zwischen dem Ende der Haltestange und dem Rohr ein Scherengelenk (25) mit Greiferbacken (13, 18) angelenkt ist.

Endseitig der Haltestange bzw. des Rohres (11, 12) ist eine Rückzieheinrichtung (14) vorgesehen, über die kurz vor Erreichen der Ausgangsstellung, die in Fig. 1 wiedergegeben ist, der Greifer (5) bzw. die Greiferbacken (13, 18) durch Zurückziehen des Rohres (12) geöffnet werden. In dieser geöffneten Stellung kann der Greifer (5) ohne weiteres durch den Rand (15) des Netzrohres (4) hindurch in den Trichter (2 bzw. 3) eingefahren werden, wobei zusätzlich ein Netzabweiser vorgesehen ist, der weiter hinten noch erläutert wird. Das Gerüst (1) weist am einen Ende eine Dreipunktkupplung (17) für ein Dreipunktgestänge eines Zugfahrzeuges auf und am anderen Ende Räder (16), so daß ein leichter und schneller Transport möglich ist.

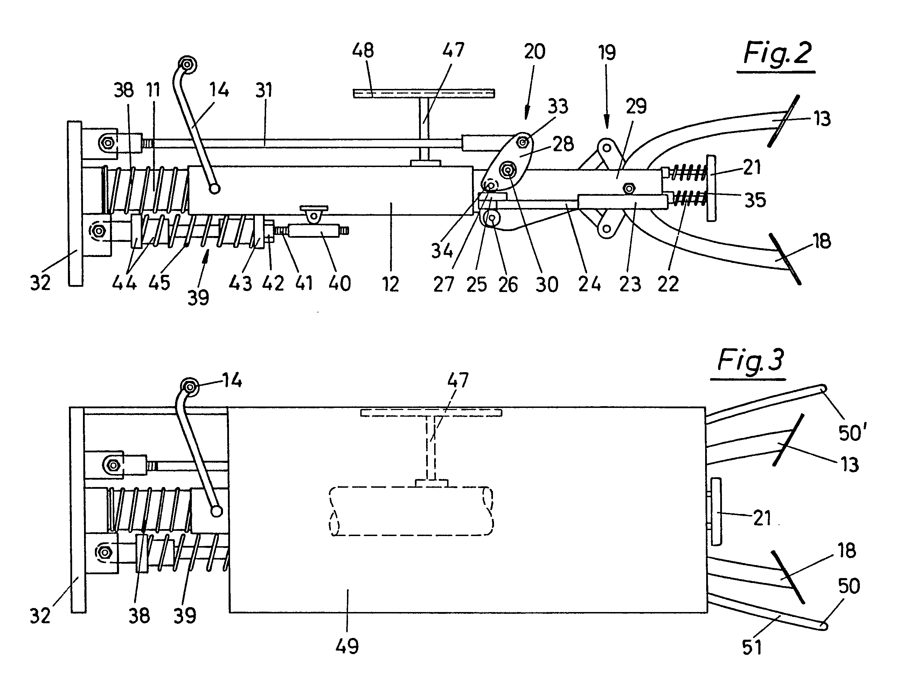

Fig. 2 zeigt einen Greifer (5) in vergrößerter Darstellung, wobei hier die geöffnete Arbeitsposition wiedergegeben ist, d.h. durch Zurückziehen des Rohres (12) auf der Haltestange (11) wird über das Scherengelenk (19) sowohl die Greiferbacke (13 wie 18) aufgeschwenkt. Über die Schließsperre (20) ist dabei sichergestellt, daß diese Stellung so lange gewährleistet ist, bis der hier nicht gezeigte Stamm eines zu verpackenden Baumes eingeführt, d.h. zwischen die Greiferbacken (13, 18) geschoben ist. Beim Einschieben eines solchen Gegenstandes drückt dieser gegen die Auslöseplatte (21), die über ein Führungsgestänge (22) geführt ist, das parallel zum Rohr (12) bzw. zu dessen Auslegerarmen (29) verläuft. Dieses Führungsgestänge (22) ist zunächst mit im bzw. durch das Hohlrohr (23) geführt und geht endseitig in eine Platte (24) über, die zwischen den Rollen (26 und 27) endseitig geführt ist. Die untere Rolle (26) ist am Rohr (12) bzw. am Auslegerarm (29) drehbar gelagert, während die Rolle (27) dem Auslöser (28) zugeordnet ist, der auf die Platte (24) bzw. die aufgesetzte Sperrplatte (25) so lange aufdrückt, wie die in Fig. 2 gegebene Situation gegeben ist. Wird dagegen die Auslöseplatte (21) gestoßen und geschoben, so verliert der Auslöser (28) den notwendigen Kontakt mit der Sperrplatte (25) und das Rohr (12) bzw. der Auslegerarm (29) kann nach vorne schnellen und dabei über das Scherengelenk (19) die Greiferbacken (13, 18) gegeneinanderfahren und dabei den Greifer (5) schließen.

Der Auslöser ist ein exzentrisch gelagerter Hebel, der über die Halteschraube (30) am Auslegerarm (29) schwenkbar gehalten ist, sich über die Stange (31) an der Halteplatte (32) abstützt und zum anderen bei entsprechender Stellung über die Sperrplatte (25) und die Rolle (27) blockiert wird. Die Halteschraube (30) ist versetzt zur gedachten Verbindungslinie zwischen Stangenverbindungspunkt (33) und Rollenverbindungspunkt (34) angeordnet und liegt näher zu letzterem als zu dem Stangenverbindungspunkt (33).

Ist die Schließsperre (20) betätigt und der Greifer (5) geschlossen worden, so folgt über die Rückzieheinrichtung (14) beim Erreichen des Ausgangs- bzw. Endpunktes ein automatisches Öffnen der Greiferbacken (13, 18), indem das Rohr (12) zwangsweise zurückgezogen wird. Das Einrasten der Schließsperre (20) ist dabei gesichert, da das Führungsgestänge (22) über eine Feder (35) belastet ist, die zwischen der Auslöseplatte (21) und dem Hohlrohr (23) eingespannt ist. Über diese Feder (35) wird damit die Auslöseplatte (21) und damit das Führungsgestänge (22) und die Sperrplatte (25) in die sichernde, aus Fig. 2 ersichtliche Stellung zurückgezogen.

Die notwendige Haltekraft der Greiferbacken (13, 18) wird über die das Rohr belastende Hohlzylinderfeder (38) erzeugt. Dabei wird die Haltekraft einstellbar dadurch, daß zusätzlich zur Hohlzylinderfeder (38) eine Federanordnung (39) vorgesehen ist, die spannbar bzw. entlastbar ist. Hierzu ist die Gewindestange (41) einmal in der Schiebeführung (40) geführt und zum anderen endseitig an der Halteplatte (32) schwenkbar befestigt. Über das Drehteil (42) können die beiden Spannplatten (43, 44) gegeneinandergeschoben und dadurch die Spannfeder (45) vorgespannt werden. Statt des Drehteiles (42) ist es auch denkbar, die Spannplatten (43, 44 bzw. 43) mit einem Gewinde zu versehen, das auf der Gewindestange (41) verschieblich ist.

Die Haltestange (11) und das Rohr (12) sowie die zugeordneten Teile sind einschließlich des Scherengelenkes (19) durch ein Hüllrohr (49) umgeben und abgesichert, das über eine T-förmige Halterung (47) mit gebogen ausgebildetem Flansch (48) auf dem Rohr (12) gelagert bzw. befestigt ist. Am vorderen Ende dieses Hüllrohres (49) sind Netzabweiser (50) vorgesehen, die die Greiferbacken (13 und 18) überragen und so ein Einführen des gesamten Greifers (5) in die Trichter (2, 3) ohne Festhaken am Netz (4a) ermöglichen. Die Netzabweiser (50) bestehen aus entsprechende Bögen (41) aufweisenden Rundstangen, die seitlich über die Greiferbacken (13, 18) vorstehen. Fig. 3 zeigt eine solche ebenfalls in geöffneter Stellung wiedergegebene Vorrichtung. Dabei ist das Hüllrohr (49) mit den Netzabweisern (50, 50') lediglich über zwei Schrauben an dem entsprechend gebogen ausgeführten Flansch (48) festgelegt.

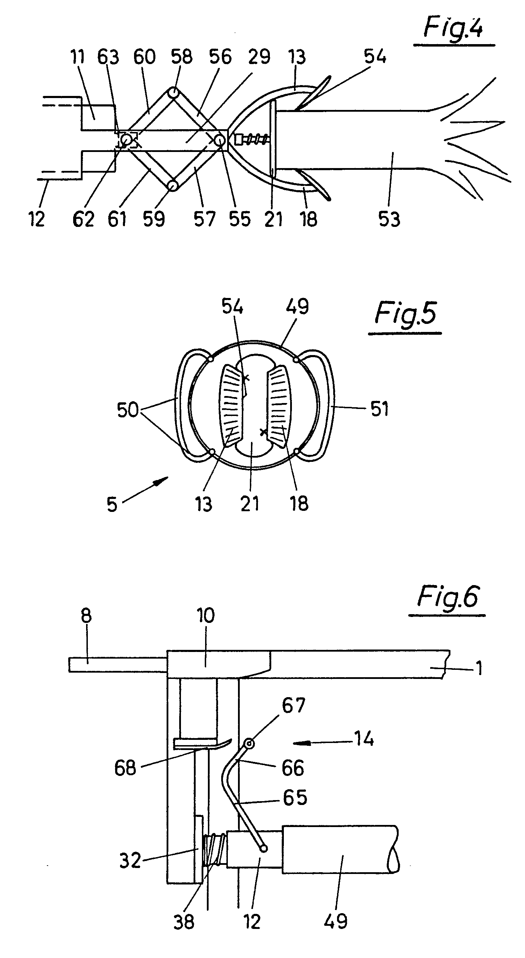

Bei Fig. 4 ist auf die Darstellung der Schließsperre (20) mit dem Auslöser (28) verzichtet. Lediglich die Auslöseplatte (21) ist angedeutet. Hier ist eine Situation wiedergegeben, wo die Greiferbacken (13, 18) gerade den Stamm (53) eines Weihnachtsbaumes erfaßt haben. Sie sind hierzu mit Messerschneiden (54) ausgerüstet, die ein Ergreifen und Festhalten des Stammes (53) begünstigen. Das Schließen der Greiferbacken (13, 18) erfolgt dadurch, daß das Rohr (12) über die hier nicht dargestellte Hohlzylinderfeder (38) über die Haltestange (11) in Richtung auf die Greiferbacken geschoben wird. Da das Rohr (12) über den Auslegerarm (29) am Scherengelenkpunkt (55) festgelegt ist, die Haltestange (11) dagegen am Gelenkpunkt (62) erfolgt so eine Beeinflussung der anden Scherengriffen (56, 57) angeordneten Messerschneiden (54) über die Gelenke (58, 59) damit verbundenen Scherenstangen (60, 61). Mit (63) ist hier der Halter bezeichnet, über den die Haltestange (11) das Gegengelenk (62) hält.

Fig. 5 zeigt eine Vorkopfansicht des mit Hüllrohr (49) und Netzabweiser (50) versehenen Greifers (5). Dabei ist verdeutlicht, daß über die Bogen (51) der Netzabweiser (50) die einzelnen Greiferbacken (13, 18) abgedeckt sind, so daß sie mit dem Netz beim Durchfahren des Trichters (2 bzw. 3) nicht in Berührung kommen können. Wiedergegeben ist auch die Auslöseplatte (21), wobei durch die Kreuze angedeutet ist, wo das Führungsgestänge (22) befestigt ist bzw. angreift.

Das Wiederöffnen der Greiferbacken (13, 18) erfolgt über die Rückzieheinrichtung (14), die Fig. 6 wiedergibt. Am Rohr (12) ist ein winkelförmiger Hebel (65) angebracht, der an seinem freien Ende (66) ein Kugellager (67) trägt, das beim Durchfahren des Niederhalters (68) an diesem abrollt und dabei das Rohr (12) so beschleunigt, daß es gegen die Kraft der Hohlzylinderfeder (38) verschoben wird und damit die Greiferbacken (13, 18) öffnen.

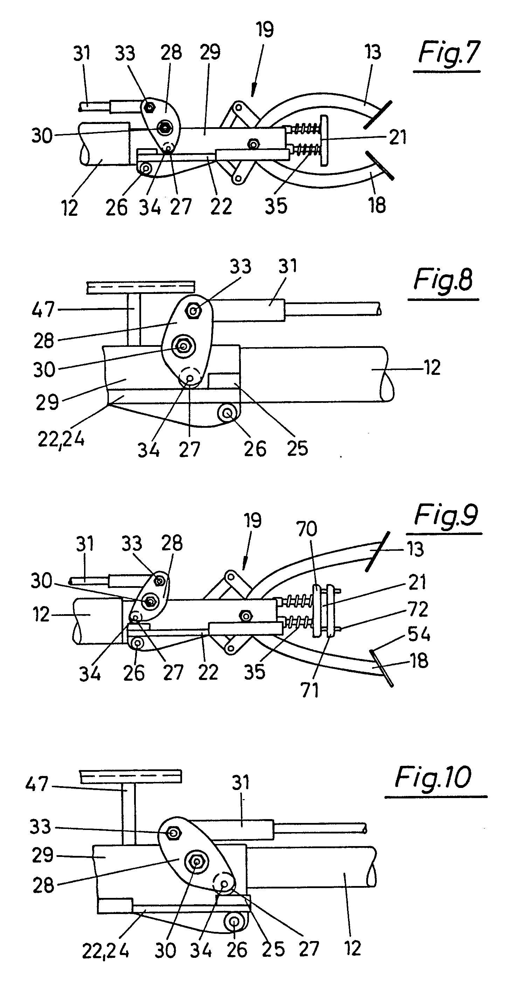

Die Fig. 7 bis 10 zeigen den Greifer bzw. das vordere Ende des Greifers (5) in geschlossenem und geöffnetem Zustand. Dabei wird deutlich, daß bei dem aus Fig. 7 und 8 ersichtlichen Schließzustand des Greifers (5) die Schließsperre (20) gelöst ist, indem die Rolle (27) auf der Platte (24) bzw. dem Führungsgestänge (22) nicht mehr abrollen, sondern vielmehr darüberliegt. Bei der aus den Fig. 9 und 10 ersichtlichen Situation dagegen befindet sich die Rolle (27) auf der Sperrplatte (25) und gegenüber dem Stangenverbindungspunkt (33) versetzt, so daß damit das Rohr (12) über die Halteschraube (30) und die Stange (31) in der vorgespannten, d.h. die Greiferbacken (13, 18) öffnenden Stellung gehalten wird. Wird nun Druck auf die Auslöseplatte (21) ausgeübt und zwar gegen die Federkraft der Federn (35), so wird die Sperrplatte (25) praktisch zwischen den Rollen (26, 27) hindurchgeschoben, so daß die Rolle (26) anschließend frei ist und das Rohr (12) aufgrund der Federbelastung durch die Hohlzylinderfeder (38) ruckartig nach vorne schnellen, so daß sich die aus Fig. 7 und 8 ersichtliche Position mit den geschlossenen Greiferbacken (13, 18) ergibt.

Fig. 9 zeigt aber eine besondere Ausbildung insofern, als hier die Auslöseplatte (12) aus zwei Platten (70, 71) besteht, die über Schrauben (72) miteinander verbunden sind. Der Auslösepunkt kann damit in eine beliebige Entfernung zu den Messerschneiden (54) der Greiferbacken (13, 18) geschoben werden.

## Patentansprüche

1. Vorrichtung zum Verpacken von Koniferen, insbesondere von sogenannten Weihnachtsbäumen u.ä. Pflanzen, mit einem Gerüst (1) zum axialen Anordnen eines Trichters (2, 3) mit zugeordnetem Netzrohr (4) und Netz (4a) sowie eines Greifers (5), der axial zum Trichter am Gerüst verfahrbar ist und neben der die Greiferbacken (13, 18) tragenden Haltestange (11) ein federbelastetes stangenförmiges Element (12) aufweist, das in Richtung Greiferbacken verschieblich geführt und gelenkig einerseits mit den Greiferbacken und am gegenüberliegenden Ende mit einer Rückzieheinrichtung (14) verbunden ist, die ihrerseits mit einem dem Gerüst zugeordneten rampenförmigen Niederhalter (68) zusammenwirkt, wobei zwischen dem stangenförmigen Element und der Haltestange eine über den Stamm des Baumes auslösbare, mit zwischen der Greiferbacke angeordneter Auslöseplatte (21) ausgerüstete Schließsperre (20) angeordnet ist, dadurch gekennzeichnet, daß das stangenförmige Element (12) als die Haltestange (11) umhüllendes Rohr ausgebildet und mit einem die Greiferbacken (13, 18) aufweisenden Scherengelenk (19) im Scherengelenkpunkt (15) verbunden ist, und daß die Auslöseplatte (21) über ein Führungsgestänge (22) gehalten ist, das an Auslegerarmen (29) des Rohres (12) mittig über ein Hohlrohr (23) und endseitig zwischen Rollen (26, 27), das Rohr (12) über einen exzentrisch gelagerten Auslöser (28) blockierend bzw. auslösend verschieblich geführt ist, wobei der Auslöser ein am Auslegerarm (29) schwenkbar befestigter Winkelhebel ist, der an einer Seite mit einer an einer mit der Haltestange (11) fest verbundenen Halteplatte (32) gelagerten Stange (31) verbunden ist und an der gegenüberliegenden Seite die auf dem Führungsgestänge (22) bzw. einer aufgesetzten Sperrplatte (25) abrollbare Rolle (27) aufweist.

2. Vorrichtung nach Anspruch 1, dadurch gekennzeichnet, daß dem Führungsgestänge (22) eine sich an der Auslöseplatte (21) und dem Hüllrohr (23) abstützende Feder (35) zugeordnet ist.

3. Vorrichtung nach Anspruch 1, dadurch gekennzeichnet, daß die Halteschraube (30) des Auslösers (28), über die er am Auslegerarm (29) schwenkbar gehalten ist, in Richtung Greiferbacken (13, 18) vor der gedachten Verbindungslinie Stangenverbindungspunkt (33)/Rollenlagerpunkt (34) und näher vorzugsweise um 50% näher zu letzterem angeordnet ist.

4. Vorrichtung nach Anspruch 1, dadurch gekennzeichnet, daß die Auslöseplatte (21), die über das diagonal versetzt angreifende Führungsgestänge (22) gehalten ist, aus zwei Platten (70, 71) besteht, die über Schrauben (72) gegeneinander verschieblich verbunden sind.

5. Vorrichtung nach Anspruch 1, dadurch gekennzeichnet, daß eine parallel zur Haltestange (11) angeordnete, sich am Rohr (12) und an der Halteplatte (32) abstützende, einstellbar ausgebildete Federanordnung (39) vorgesehen ist.

6. Vorrichtung nach Anspruch 5, dadurch gekennzeichnet, daß die Federanordnung (39) an der Halteplatte (32) schwenkbar und am Rohr (12) verschieblich gehalten ist und eine zwischen zwei auf einer am Rohr geführten Stange, vorzugsweise auf einer Gewindestange (41) verschieblichen Spannplatten (43, 44) angeordnete Spannfeder (45) aufweist.

7. Vorrichtung nach Anspruch 1, dadurch gekennzeichnet, daß die Rückzieheinrichtung (14) aus einem am Rohr (12) gelenkig angeordneten Hebel (65) besteht, der am freien Ende (66) ein Kugellager (67) aufweist und der an dem am Ende einer der Greifer (5) tragenden Schiene (8) angebrachten Niederhalter (68) abrollend auf das Rohr einwirkend geformt, vorzugsweise gebogen ausgebildet ist.

8. Vorrichtung nach Anspruch 1 und Anspruch 5, dadurch gekennzeichnet, daß das Rohr (12) von einem auch die Greiferbacken (13, 18) und die Federanordnung (39) aufnehmenden Hüllrohr (49) umgeben ist, an das die Greiferbacken überragende Netzabweiser (50) angesetzt sind.

9. Vorrichtung nach Anspruch 8, dadurch gekennzeichnet, daß die Netzabweiser (50) als schlingenförmig gebogene Rundstangen ausgebildet sind, deren Bögen (51) parallel und nach außen versetzt zu den Greiferbacken (13, 18) verlaufen.

10. Vorrichtung nach Anspruch 8, dadurch gekennzeichnet, daß das Hüllrohr (49) über eine T-förmige Halterung (47), deren Flansch (48) dem Hüllrohr entsprechend gebogen ausgeführt ist, mit dem Rohr (12) verbunden ist.

## Claims

1. Device for packing conifers, especially Christmas trees and other plants, having a framework (1) on which is axially arranged a funnel (2, 3) with an associated net tube (4) and net (4a) and also a gripper (5), which is movable on the framework axially of the funnel and which has a spring loaded rod-like element (12) adjacent the holding rod (11) carrying the gripper claws (13, 18), which is movable in the direction of the gripper claws and pivotally connected on one side to the gripper claws and at the opposite end with a retracting device (14), which for its part cooperates with a ramp-like holding down element (68) arranged on the framework, wherein, between the rod-like element and the holding rod is arranged a lock (20) releasable by the trunk of the tree, provided with a trigger plate (21) arranged between the gripper claws, characterized in that the rod-like element (12) is formed as a sleeve surrounding the holding rod (11) and is connected with a pincer linkage (19) of the gripper claws (13, 18) at the pincer pivot point (55), and that the trigger plate (21) is held by a guide rod (22), which is slidably guided on outrigger arms (29) of the sleeve (12), midway by a sleeve (23) and at its end between rollers (26, 27), obstructing or releasing the sleeve (12) by an excentrically pivoted release (28), in which the release is a bell crank, pivotally mounted on an outrigger arm (29), which is connected on one side with a rod (31) carried on a holding plate (32) rigidly connected to the holding rod (11) and on the opposite side having a roller (27) which rolls on the guide rod (22) or a locking plate (25) mounted thereon.

2. Device according to claim 1, characterized in that a spring (35) acting against the trigger plate (21) and the sleeve (23) is arranged on the guide rod (22).

3. Device according to claim 1, characterized in that the holding screw (30) of the release (28), by which it is pivotally mounted on the outrigger arm (29) is arranged in front, in the direction of the gripper claws (13, 18), of the imaginary point (33) and the roller bearing point (34) and closer, preferably 50% closer to the latter.

4. Device according to claim 1, characterized in that the trigger plate (21), which is held by the diagonally offset feeler guide rod (22), comprises two plates (70, 71), which are connected to move relatively to each other by screws (72).

5. Device according to claim 1, characterized in that an adjustably constructed spring arrangement (39) is provided arranged parallel to the holding rod (11), acting against the holding plate (32).

6. Device according to claim 5, characterized in that the spring arrangement (39) is held pivotally on the holding plate (32) and movably on the sleeve (12), and has a tension spring (45) arranged between two movable tension plates (43, 44) on a rod guided on the sleeve, preferably on a threaded rod (41).

7. Device according to claim 1, characterized in that the retracting device (14) comprises a lever (65), pivotally mounted on the sleeve (12), which at its free end (66) has a rolling bearing (67) and which is effectively shaped, preferably bent, on the sleeve, so as to roll on the holding down device (68) when it is brought on the end of one of the rails (8) carrying the gripper (5).

8. Device according to claim 1 and claim 5, characterized in that the sleeve (12) is surrounded by a sleeve (49), also enclosing the gripper claws (13, 18) and the spring arrangement (39), on which is mounted the net spreader (50) surrounding the gripper claws.

9. Device according to claim 8, characterized in that the net spreader (5) is formed as loops of bent round wire which arch outwardly of the gripper claws (13, 18).

10. Device according to claim 8, characterized in that the sleeve (49) is connected with the sleeve (12) by a T-shaped support (47) having a flange (48) correspondingly bent to the shape of the sleeve (49).

**Revendications**

1. Dispositif pour l'emballage de conifères, en particulier de ce que l'on désigne sous le nom de sapins de Noël et autres plants, comportant un châssis (1) pour disposer axialement une trémie (2, 3) comportant un tube en treillis (4) et un treillis (4a) ainsi qu'un dispositif de saisie (5), qui peut se déplacer le long du châssis vers la trémie et qui présente, contre la tige de maintien (11) portant les mors de saisie (13, 18), un organe (12) en forme de tige, commandé par ressort, qui est guidé et peut se déplacer dans la direction des mors de saisie et comporte, d'une côté, une articulation avec les mors de saisie et est raccordé, à l'extrémité opposée, avec un dispositif d'évacuation (14), qui, de son côté, agit simultanément avec un organe abaisseur (68), en forme de rampe, dont est équipé le châssis, tandis qu'est adapté, entre l'organe en forme de tige et la tige de maintien, un dispositif de blocage de fermeture (20), pouvant être libéré par l'intermédiaire du tronc de l'arbre, et équipé d'une plaque de déclenchement (21) disposée entre les mors de saisie, caractérisé en ce que l'organe (12) en forme de tige est réalisé comme un tube entourant la tige de maintien (11) et est raccordé, au point d'articulation (55), avec une articulation à parallélogramme (19) équipée des mors de saisie (13, 18), et en ce que la plaque de déclenchement (21) est maintenue par l'intermédiaire d'un train de tiges-guides (22) qui est guidé, le long du bras de flèche (29) du tube (12), au milieu par l'intermédiaire d'un tube creux (23) et, à son extrémité, entre des galets (26, 27), soit en bloquant, soit en libérant le tube (12) par l'intermédiaire d'un déclencheur (28) disposé en excentrique, le déclencheur étant un levier coudé fixé basculant sur le bras de flèche (29), levier qui, d'un côté, est relié à une tige (31) montée articulée sur une plaque de maintien (32) rattachée d'une façon fixe à la tige de maintien (11), et qui, du côté opposé, présente le galet (27) qui peut rouler sur le train de tiges-guides (22) ou sur une plaque de butée (25) montée sur lui.

2. Dispositif suivant la revendication 1, caractérisé en ce qu'au train de tiges-guides (22) est associé un ressort (35) s'appuyant sur la plaque de déclenchement (21) et le tube creux (23).

3. Dispositif suivant la revendication 1, caractérisé en ce que la vis de maintien (30) du déclencheur (28), par laquelle il est maintenu orientable sur les bras de flèche (29), est disposée en avant, dans la direction des mors de saisie (13, 18), de la ligne imaginaire reliant le point (33) de raccordement de la tige et le point (34) du palier de galet, et, avantageusement, de 50% plus près de ce dernier.

4. Dispositif suivant la revendication 1, caractérisé en ce que la plaque de déclenchement (21), qui est maintenue par l'intermédiaire du train de tiges-guides (22) agissant décalé diagonalement, comporte deux plaques (70, 71) qui sont reliées entre elles par l'intermédiaire de vis (72) en pouvant se déplacer l'une par rapport à l'autre.

5. Dispositif suivant la revendication 1, caractérisé en ce qu'est prévu un ensemble à ressorts (39) disposé parallèlement à la tige de maintien (11), s'appuyant sur le tube (12) et la plaque de maintien (32) et réalisé de façon à être réglable.

6. Dispositif suivant la revendication 5, caractérisé en ce que l'ensemble à ressorts (39) est maintenu sur la plaque de maintien (32), en pouvant pivoter, et sur le tube (12), en pouvant se déplacer le long de lui, et présente un ressort contraint (45) disposé entre deux plaques de contrainte (43, 44) pouvant coulissier sur une tige guidée le long du tube, avantageusement sur une tige filetée (41).

7. Dispositif suivant la revendication 1, caractérisé en ce que le dispositif d'évacuation (14) est constitué par un levier (65) monté articulé sur le tube (12) et muni à son extrémité libre (66), d'un roulement à billes (67) et qui est réalisé de forme, avantageusement plié, agissant sur le tube en roulant le long de l'organe abaisseur (68) fixé à l'extrémité d'un rail (8) portant le dispositif de saisie (5).

8. Dispositif suivant la revendication 1 et la revendication 5, caractérisé en ce que le tube (12) est entouré d'un tube creux (49) contenant les mors de saisie (13, 18) et l'ensemble à ressorts (39), sur lequel sont montés les déflecteurs en treillis (50) surplombant les mors de saisie.

9. Dispositif suivant la revendication 8, caractérisé en ce que les déflecteurs en treillis (5) sont formés de barres rondes pliées pour former des boucles, dont les arceaux (51) sont disposés parallèlement et déportés vers l'extérieur par rapport aux mors de saisie (13, 18).

10. Dispositif suivant la revendication 8, caractérisé en ce que le tube creux (49) est relié au tube (12) par l'intermédiaire d'une fixation en forme de T dont la bride (48) est exécutée par pliage pour s'adapter au tube creux.

## Fig.1

EP 0 231 366 B1

Fig.2

Fig.3

EP 0 231 366 B1

_Fig.4_

_Fig.5_

_Fig.6_

_Fig.7_

31  33  28  29  19  13

30

12  26  34  27  22  35  18  21

_Fig.8_

47  33  31

28

30

29  12

22,24

34  27  26  25

_Fig.9_

19  70  13

31  33  28

30  21

12  72

54

34  26  27  22  35  18

71

_Fig.10_

47  31

33

29

28

22,24  30  34  26  25  27  12